# EUROPÄISCHE PATENTSCHRIFT

(11) **EP 3 502 522 B1**
(45) Veröffentlichungstag und Bekanntmachung des Hinweises auf die Patenterteilung: **17.06.2020**
(21) Anmeldenummer: 18203658.2
(22) Anmeldetag: 31.10.2018
(51) Int. Cl.: F16J 15/3228, F16J 15/3244, F16J 15/3264

(54) **MEHRTEILIGE DICHTUNG, INSBESONDERE KASSETTENDICHTUNG**
MULTI-PART SEAL, IN PARTICULAR CASSETTE SEAL
JOINT EN PLUSIEURS PIÈCES, EN PARTICULIER JOINT D'ÉTANCHÉITÉ À CASSETTE

(30) Priorität: 19.12.2017 DE 102017130459
(43) Veröffentlichungstag der Anmeldung: 26.06.2019
(73) Patentinhaber: MAN Truck & Bus SE, 80995 München (DE)
(72) Erfinder: Croner, Jan, 90587 Veitsbronn (DE)
(74) Vertreter: v. Bezold & Partner Patentanwälte - PartG mbB

(56) Entgegenhaltungen:
- EP-A1- 2 058 563
- DE-A1- 19 543 571
- DE-C1- 19 841 099

## Beschreibung

Die Erfindung betrifft eine mehrteilige Dichtung, insbesondere eine Kassettendichtung, mit mindestens zwei relativ zueinander bewegbaren Teilen.

Zur Erfüllung von aufwendigen Dichtungsfunktionen zum Beispiel bei Brennkraftmaschinen können mehrteilige Dichtungen, wie beispielsweise Kassettendichtungen, eingesetzt werden. Derartige mehrteilige Dichtungen können beispielsweise zwei zueinander drehbare Teile aufweisen, die mit mehreren Dichtlippen versehen sein können.

Beispielsweise offenbart die DE 198 41 099 C1 einen Radialwellendichtring, der in ein zumindest teilweise mit einem Fluid gefüllten Gehäuse eingesetzt ist und von einer koaxial zu diesem angeordneten Welle durchsetzt ist. Eine Dichtlippe liegt unter Vorspannung radial um die Welle an und dichtet das Fluid gegen einen Durchtritt von einem gehäuseinneren Raum in einen gehäuseäußeren Raum ab. Ein Dichtringkörper weist eine erste Öffnung auf, die einen gasdurchströmbaren Verbindungskanal zwischen dem gehäuseinneren Raum und dem gehäuseäußeren Raum herstellt.

Die DE 195 43 571 A1 offenbart einen Wellendichtring mit einem Stützring und einer daran angeschlossenen Dichtlippe sowie einem Druckentlastungsventil zwischen dem abzudichtenden Raum und der Umgebung. Eine Öffnung in dem Stützring ist mit einem flüssigkeitsdichten Einsatz ausgekleidet, der bei Überschreiten einer zulässigen Druckdifferenz zwischen dem Raum und der Umgebung gasdurchlässig wird.

Der Erfindung liegt die Aufgabe zu Grunde, eine alternative oder verbesserte mehrteilige Dichtung zu schaffen. Insbesondere soll die mehrteilige Dichtung weniger verschleißanfällig sein.

Die Aufgabe wird gelöst durch eine mehrteilige Dichtung gemäß dem unabhängigen Anspruch. Vorteilhafte Weiterbildungen sind in den abhängigen Ansprüchen und der Beschreibung angegeben.

Die mehrteilige Dichtung ist insbesondere eine Kassettendichtung. Die mehrteilige Dichtung weist mindestens zwei relativ zueinander bewegbare (zum Beispiel drehbare) Teile auf. Die mehrteilige Dichtung weist mindestens eine zur Umgebung hin abdichtende Staubschutzlippe auf. Die mehrteilige Dichtung weist eine zum abzudichtenden Raum (z.B. Kurbelkammer) hin abdichtende Schmierfluiddichtlippe auf. Eine hohle Zwischenkammer ist zwischen der mindestens einen Staubschutzlippe und der Schmierfluiddichtlippe gebildet. Die Schmierfluiddichtlippe ist dazu ausgebildet, aus dem abzudichtenden Raum in die Zwischenkammer entwichenes Leckagefluid (zum Beispiel Öl) zum abzudichtenden Raum hin zurückzufördern. Die mehrteilige Dichtung weist einen Druckausgleichskanal, der in die Zwischenkammer mündet, zum Zuführen eines Fluids (z. B. Luft, insbesondere aus dem abzudichtenden Raum) in die Zwischenkammer auf.

Es wurde herausgefunden, dass sich bei einer mehrteiligen Dichtung in der Zwischenkammer zwischen den relativ zueinander bewegbaren Teilen aufgrund der Förderwirkung der Schmierfluiddichtlippe ein Unterdruck ausbilden kann. Dieser Unterdruck kann die Staubschutzlippen und die Schmierfluiddichtlippe auf schädigende Weise verformen. Im Einzelnen können die Staubschutzlippen und die Schmierfluiddichtlippe zu stark gegen entsprechende Laufflächen der mehrteiligen Dichtung gepresst werden. Dies kann den Verschleiß erhöhen und die Abdichtungswirkung negativ beeinträchtigen. Der Druckausgleichskanal schafft einen Druckausgleich zwischen der Zwischenkammer und dem abzudichtenden Raum und/oder der Umgebung. Dadurch kann kein Unterdruck in der Zwischenkammer entstehen. Die Staubschutzlippen und die Schmierfluiddichtlippe werden nicht verformt. Der Verschließ wird verringert und die Dichtwirkung kann erhöht werden.

Beispielsweise kann die Dichtung zum Abdichten eines (beispielsweise vorderen oder hinteren) Kurbelwellenendes einer Kurbelwelle einer Brennkraftmaschine, z. B. eines Kraftfahrzeugs, insbesondere Nutzfahrzeugs, verwendet werden. Es ist auch möglich, die Dichtung beispielsweise zum Abdichten von Achsen oder Achsenenden, insbesondere von Fahrzeugachsen, zu verwenden.

Zweckmäßig kann bei Vorsehen mehrerer Staubschutzlippen der Zwischenraum zwischen den Staubschutzlippen mit einem insbesondere pastösen Schmiermittel, z. B. Schmierfett, gefüllt sein. Damit kann die Dichtwirkung verbessert werden.

In einem bevorzugten Ausführungsbeispiel ist ein durch die Förderwirkung der Schmierfluiddichtlippe erzeugter Unterdruck in der Zwischenkammer mittels eines Fluids, das durch den Druckausgleichskanal in die Zwischenkammer einströmt, kompensierbar oder wir durch dieses kompensiert. Vorzugsweise kommt es so zu keiner Verformung der mindestens einen Staubschutzlippe und/oder der Schmierfluiddichtlippe unter der Einwirkung des Unterdrucks in der Zwischenkammer.

In einem Ausführungsbeispiel verbindet der Druckausgleichskanal den abzudichtenden Raum mit der Zwischenkammer fluidisch. Beispielsweise kann sich der Druckausgleichskanal zwischen der Zwischenkammer und einer zum abzudichtenden Raum hin gewandten Seitenfläche der Dichtung erstrecken. Alternativ oder zusätzlich kann der Druckausgleichskanal sich zwischen der Zwischenkammer und einer radialen Außenumfangsfläche der Dichtung erstrecken.

Es ist auch möglich, dass im Gehäuse ein weiterer Druckausgleichskanal angeordnet ist, der in den Druckausgleichskanal der mehrteiligen Dichtung mündet, zum Beispiel im Bereich einer Außenumfangsfläche der mehrteiligen Dichtung. Insbesondere kann der weitere Druckausgleichskanal den abzudichtenden Raum und den Druckausgleichskanal der mehrteiligen Dichtung fluidisch verbinden.

In einem weiteren Ausführungsbeispiel ist der Druckausgleichskanal gebohrt oder gestanzt und/oder der Druckausgleichskanal weist einen Durchmesser kleiner als 3 mm, insbesondere in einem Bereich zwischen 0,3 mm und 2 mm, auf. Damit kann der Druckausgleichskanal auf einfache Weise hergestellt werden. Ein geringer Durchmesser verhindert übermäßige Leckage über den Druckausgleichskanal in die Zwischenkammer.

In einer Ausführungsform erstreckt sich der Druckausgleichskanal durch ein Stützelement, insbesondere ein Blechteil, der Dichtung. Alternativ oder zusätzlich erstreckt sich der Druckausgleichskanal durch ein Elastomerelement der Dichtung.

In einer weiteren Ausführungsform weist die Dichtung einen gehäusefest anordenbaren oder angeordneten ersten Teil und einen wellenfest anordenbaren oder angeordneten zweiten Teil auf. Der erste Teil und der zweite Teil sind relativ zueinander bewegbar, insbesondere drehbar.

Insbesondere kann eine Dichtungsanordnung ein Gehäuse, z. B. ein Kurbelgehäuse einer Brennkraftmaschine, eine drehbar in dem Gehäuse gelagerte Welle, zum Beispiel Kurbelwelle, und die mehrteilige Dichtung aufweisen. Insbesondere kann der erste Teil gehäusefest im Gehäuse angeordnet sein. Insbesondere kann der zweite Teil drehfest auf der Welle angeordnet sein.

In einer weiteren Ausführungsform dichtet die mindestens eine Staubschutzlippe zwischen dem ersten Teil und dem zweiten Teil ab. Alternativ oder zusätzlich dichtet die Schmierfluiddichtlippe zwischen dem ersten Teil und den zweiten Teil ab. Alternativ oder ergänzend ist die Zwischenkammer zwischen dem ersten Teil und dem zweiten Teil gebildet.

Insbesondere kann die Schmierfluiddichtlippe dazu angeordnet sein, auf einer Lauffläche des zweiten Teils während einer Drehung des zweiten Teils zu gleiten. Insbesondere kann die mindestens eine Staubschutzlippe dazu angeordnet sein, auf einer Lauffläche des ersten Teils während einer Drehung des zweiten Teils zu gleiten.

In einer Weiterbildung ist der erste Teil und/oder der zweite Teil mit dem Druckausgleichskanal versehen.

In einer Ausführungsvariante ist der erste Teil mit der Schmierfluiddichtlippe und dem Druckausgleichskanal versehen. Alternativ oder zusätzlich ist der zweite Teil mit der mindestens einen Staubschutzlippe versehen.

In einer weiteren Ausführungsvariante weist der erste Teil einen statischen Abdichtbereich zum Abdichten gegenüber einem Gehäuse auf und/oder der zweite Teil weist einen statischen Abdichtbereich zum Abdichten gegenüber einer Welle auf.

In einem Ausführungsbeispiel weist die mehrteilige Dichtung ferner ein druckbetätigtes Ventil auf, das insbesondere in oder an dem Druckausgleichskanal angeordnet ist und bei einem Unterdruck in der Zwischenkammer öffnet. Damit wird eine Fluidverbindung mittels dem Druckausgleichskanal nur hergestellt, wenn sich ein Unterdruck in der Zwischenkammer aufbaut. Folglich kann eine Leckage von beispielsweise Schmierfluid durch den Druckausgleichskanal verringert werden.

In einer Weiterbildung ist das druckbetätigte Ventil als eine elastische Lamelle ausgebildet.

Beispielsweise kann die elastische Lamelle an einer in die Zwischenkammer mündenden Auslassöffnung des Druckausgleichskanals angeordnet sein.

In einem weiteren Ausführungsbeispiel erstreckt sich ein freies Ende der Schmierfluiddichtlippe zu dem abzudichtenden Raum hin. Es ist auch möglich, dass die Schmierfluiddichtlippe zumindest abschnittsweise profiliert, insbesondere wendelförmig, zum Fördern des entwichenen Leckagefluids ausgebildet ist. Alternativ oder zusätzlich ist die Zwischenkammer direkt angrenzend an die mindestens eine Staubschutzlippe und die Schmierfluiddichtlippe angeordnet ist.

In einer weiteren Ausführungsform ist die Dichtung als Radialwellendichtring ausgebildet, die Dichtung für einen Presssitz zwischen einem Gehäuse und einer Welle (Achse) ausgebildet, die Dichtung als eine Kurbelwellendichtung ausgebildet und/oder die Zwischenkammer ist ein Ringraum.

Insbesondere kann der Druckausgleichkanal so angeordnet sein, dass keine Flüssigkeit (wenn vorhanden) aus dem abzudichtenden Raum in den Druckausgleichskanal einfließen kann und/oder aus dem Druckausgleichskanal in die Zwischenkammer ausfließen kann. Beispielsweise kann der Druckausgleichkanal im Einbauzustand in einer Richtung einer Mittelachse der Dichtung betrachtet im Uhrzeigersinn zwischen einer 9:00 Uhr-Stellung und einer 3:00 Uhr-Stellung, insbesondere bei einer 12:00 Uhr-Stellung (vertikal mittig oberhalb der Mittelachse), angeordnet sein.

Beispielsweise kann der der erste Teil der Dichtung in das Gehäuse eingepresst sein und/oder der zweite Teil der Dichtung auf der Welle aufgepresst sein.

Insbesondere kann die Schmierfluiddichtlippe aus einem Elastomer und/oder PTFE (Polytetrafluorethylen) hergestellt sein.

Die Erfindung ist auch auf ein Kraftfahrzeug, insbesondere Nutzfahrzeug (zum Beispiel Omnibus oder Lastkraftwagen), mit einer mehrteiligen Dichtung wie hierin offenbart gerichtet.

Es ist auch möglich, die mehrteilige Dichtung wie hierin offenbart in anderen Vorrichtungen zu verwenden, z. B. in Personenkraftwagen, Großmotoren, geländegängigen Fahrzeuge, stationären Motoren, Marinemotoren usw.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Schnittansicht durch eine mehrteilige Dichtung gemäß einem Ausführungsbeispiel der vorliegenden Offenbarung;
- Figur 2: eine Schnittansicht durch eine mehrteilige Dichtung gemäß einem weiteren Ausführungsbeispiel der vorliegenden Offenbarung; und
- Figur 3: eine Schnittansicht durch eine mehrteilige Dichtung gemäß einem weiteren anderen Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

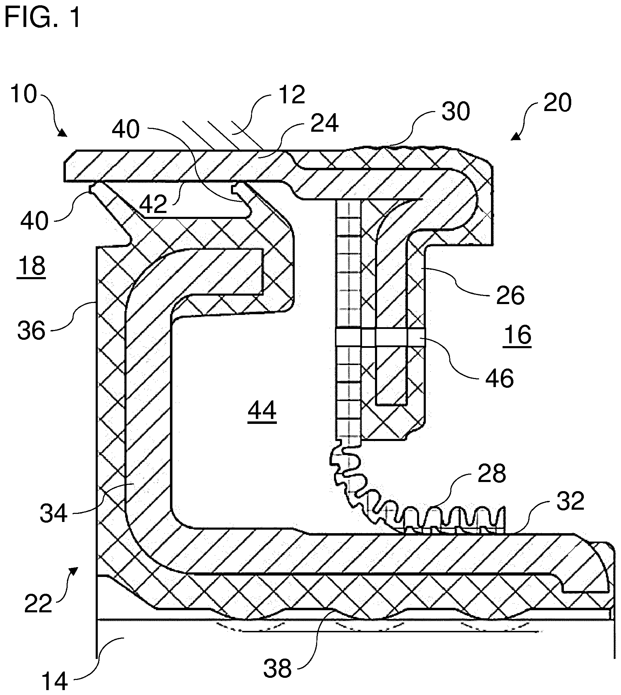

Die Figur 1 zeigt eine mehrteilige Dichtung 10. Im dargestellten Ausführungsbeispiel ist die Dichtung 10 zum Abdichten zwischen einem Kurbelgehäuse 12 und einer Kurbelwelle 14 einer Brennkraftmaschine angeordnet. Die Brennkraftmaschine kann beispielsweise in einem Kraftfahrzeug, insbesondere einem Nutzfahrzeug, zum Beispiel einem Omnibus oder einem Lastkraftwagen, umfasst sein. Es ist allerdings auch möglich, die mehrteilige Dichtung 10 für andere Wellen oder Achsen zu verwenden.

Die mehrteilige Dichtung 10 ist als Radialwellendichtring (RWDR) ausgebildet. Insbesondere ist die mehrteilige Dichtung 10 als eine sogenannte Kassettendichtung ausgebildet. Die innere Konstruktion der Kassettendichtung ermöglicht durch Kombination von Dichtlippen und Laufbuchsen bzw. Laufflächen für die Dichtlippen eine wirksame Abdichtung auch unter schwierigen Einsatzbedingungen. Insbesondere kann die Kassettendichtung zweiteilig sein und zweckmäßig eine Zwischenkammer zwischen den zwei Teilen aufweisen.

Die mehrteilige Dichtung 10 kann zwischen dem Kurbelgehäuse 12 und der Kurbelwelle 14 eingepresst sein. Die mehrteilige Dichtung 10 dichtet eine Kurbelkammer 16 der Brennkraftmaschine gegenüber einer Umgebung 18 ab.

Die mehrteilige Dichtung 10 weist einen ersten Teil 20 und einen zweiten Teil 22 auf. Der erste Teil 20 ist in eine Aufnahme im Kurbelgehäuse 12 eingepresst. Der zweite Teil 22 ist auf die Kurbelwelle 14 aufgepresst. Mit anderen Worten gesagt, der erste Teil 20 ist gehäusefest, während der zweite Teil 22 wellenfest ist. Das heißt, der zweite Teil 22 ist drehfest mit der Kurbelwelle 14 verbunden und dreht sich somit mit der Kurbelwelle 14. Im Betrieb der Brennkraftmaschine drehen sich somit der erste Teil 20 und der zweite Teil 22 relativ zueinander um eine Längsachse der Kurbelwelle 14.

Der erste Teil 20 weist ein Stützelement 24, ein Elastomerelement 26 und eine Schmierfluiddichtlippe 28 auf.

Das Stützelement 24 verleiht dem ersten Teil 20 die nötige Festigkeit und Stabilität zum Einpressen in das Kurbelgehäuse 12. Das Stützelement 24 kann beispielsweise als ein Blechteil ausgebildet sein. Das Stützelement 24 weist im Wesentlichen einen L-Querschnitt auf. Insbesondere weist das Stützelement 24 einen sich parallel zur Kurbelwelle 14 erstreckenden, ersten Schenkel und einen sich senkrecht zu Kurbelwelle 14 erstreckenden, zweiten Schenkel auf.

Das Elastomerelement 26 umgibt den zweiten Schenkel des Stützelements 24 und teilweise den ersten Schenkel des Stützelements 24. Das Elastomerelement 26 weist einen statischen Abdichtbereich 30 auf. Mittels des statischen Abdichtbereichs 30 erfolgt eine statische Abdichtung zwischen dem ersten Teil 20 und dem Kurbelgehäuse 12 im eingepressten Zustand der mehrteiligen Dichtung 10.

Die Schmierfluiddichtlippe 28 kann an dem Stützelement 24 und/oder dem Elastomerelement 26 angebracht sein. Die Schmierfluiddichtlippe 28 dichtet die Kurbelkammer 16 nach außen hin ab. Im Einzelnen verhindert die Schmierfluiddichtlippe 28 ein Austreten von Schmierfluid aus der Kurbelkammer 16. Die Schmierfluiddichtlippe 28 dichtet zwischen dem ersten Teil 20 und dem zweiten Teil 22 ab. Die Schmierfluiddichtlippe 28 läuft auf einer der Schmierfluiddichtlippe 28 zugewandten Lauffläche 32 des zweiten Teils 22. Die Schmierfluiddichtlippe 28 kann beispielsweise aus einem Elastomermaterial, z.B. Gummi, und/oder PTFE (Polytetrafluorethylen) hergestellt sein.

Der zweite Teil weist ein Stützelement 34 und ein Elastomerelement 36 auf. Das Stützelement 34 verleiht dem zweiten Teil 22 die nötige Festigkeit und Stabilität zum Aufpressen auf die Kurbelwelle 14. Der Stützelement 34 kann beispielsweise als ein Blechteil ausgebildet sein. Das Stützelement 34 weist im Wesentlichen einen L-Querschnitt auf. Insbesondere weist das Stützelement 34 einen sich parallel zur Kurbelwelle 14 erstreckenden, ersten Schenkel und einen sich senkrecht zu Kurbelwelle 14 erstreckenden, zweiten Schenkel auf. Das Stützelement 34 weist zudem die Lauffläche 32 für die Schmierfluiddichtlippe 28 auf.

Das Elastomerelement 36 umgibt den zweiten Schenkel des Stützelements 34 und teilweise den ersten Schenkel des Stützelements 34. Das Elastomerelement 36 weist einen statischen Abdichtbereich 38 auf. Mittels des statischen Abdichtbereichs 38 erfolgt eine statische Abdichtung zwischen dem zweiten Teil 22 und der Kurbelwelle 14 im eingepressten Zustand der mehrteiligen Dichtung 10.

Das Elastomerelement 36 weist mehrere (zwei in der dargestellten Ausführungsform) Staubschutzlippen 40 auf. Die Staubschutzlippen 40 verhindern, dass Staub aus der Umgebung 18 in die mehrteilige Dichtung 10 gelangt. Die Staubschutzlippen 40 laufen im Betrieb auf einer den Staubschutzlippen 40 zugewandten Lauffläche 42 des Stützelements 24 des ersten Teils 20 der mehrteiligen Dichtung 10. Es ist auch möglich, dass mehr oder weniger als zwei Staubschutzlippen 40 vorgesehen sind. Der Zwischenraum zwischen den Staubschutzlippen kann beispielsweise mit einem Schmierfett gefüllt sein, um die Dichtwirkung zu erhöhen.

Zwischen dem ersten Teil 20 und dem zweiten Teil 22 ist eine hohle Zwischenkammer 44 gebildet. Die Zwischenkammer 44 ist zwischen den Staubschutzlippen 40 und der Schmierfluiddichtlippe 28 angeordnet. Die Zwischenkammer 44 ist ringförmig.

Die Schmierfluiddichtlippe 28 ist ferner mit einer Schmierfluidförderfunktion versehen. Dadurch kann die Schmierfluiddichtlippe 28 aus der Kurbelkammer 16 entwichenes Leckagefluid in die Kurbelkammer 16 zurückfördern. Die Schmierfluiddichtlippe 28 kann beispielsweise abschnittsweise wendelförmig ausgebildet sein. Bei Drehung der Kurbelwelle 14 dreht sich der zweite Teil 22 und damit die Lauffläche 32. Die Schmierfluiddichtlippe 28 dreht sich nicht. Dadurch wird Schmierfluid auf der Lauffläche 32 aus der Zwischenkammer 44 in die Kurbelkammer 16 gefördert.

Die Förderung von Fluid aus der Zwischenkammer 44 durch die Schmierfluiddichtlippe 28 in die Kurbelkammer 16 könnte prinzipiell zu einem Unterdruck (einem Druckwert unter atmosphärischen Druck) führen. Im Gegensatz dazu herrscht in der Kurbelkammer 16 und der Umgebung 18 im Wesentlichen ein atmosphärischer Druck. Der Unterdruck in der Zwischenkammer 44 könnte dazu führen, dass die Schmierfluiddichtlippe 28 und die Staubschutzlippen 40 beispielsweise stärker gegen die jeweiligen Laufflächen 32, 42 der mehrteiligen Dichtung 10 gepresst werden. Die Schmierfluiddichtlippe 28 und die Staubschutzlippen 40 würden sich verformen, stärker verschleißen und die jeweilige Dichtwirkung würde beeinträchtigt werden.

Um zu verhindern, dass ein Unterdruck in der Zwischenkammer 44 entsteht, ist ein Druckausgleichskanal 46 vorgesehen. Mittels des Druckausgleichskanals 46 kann Luft aus der Kurbelkammer 16 in die Zwischenkammer 44 gelangen. Das durch den Druckausgleichskanal 46 nachströmende Fluid verhindert die Entstehung eines Unterdrucks in der Zwischenkammer 44.

Der Druckausgleichskanal 46 kann sich beispielsweise durch den zweiten Teil 22 von einer der Kurbelkammer 16 zugewandten Fläche zu einer der Zwischenkammer 44 zugewandten Fläche erstrecken. Wie dargestellt ist, kann ich der Druckausgleichskanal 46 dabei durch das Elastomerelement 26, das Stützelement 24 und einen Anbringungsbereich der Schmierfluiddichtlippe 28 erstrecken.

Der Druckausgleichskanal 46 kann beispielsweise gestanzt oder gebohrt sein. Der Druckausgleichskanal 46 kann einen Durchmesser aufweisen, der so gewählt wird, dass die Luft in die Zwischenkammer 44 gelangen kann, um die Entstehung eines Unterdrucks in der Zwischenkammer 44 zu verhindern. Der Durchmesser kann ferner so gewählt sein, dass nur wenig Schmierfluid insbesondere in Form von mit der Luft transportierten Schmierfluidtröpfchen aus der Kurbelkammer 16 durch den Druckausgleichskanal 46 in die Zwischenkammer 44 gelangt. Beispielsweise kann der Durchmesser in einem Bereich zwischen 0,3 mm und 2 mm sein.

Der im Ausführungsbeispiel von Figur 1 dargestellte Druckausgleichskanal 46 schafft eine kontinuierliche Fluidverbindung zwischen der Kurbelkammer 16 und der Zwischenkammer 44.

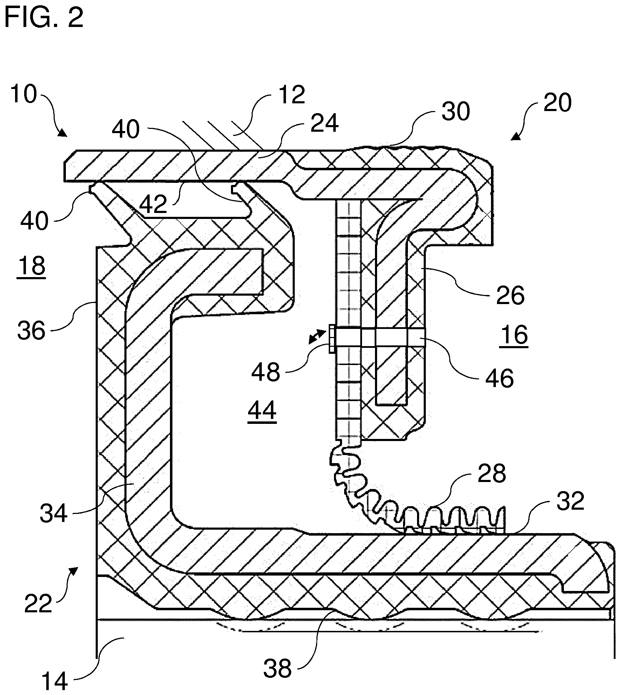

In Figur 2 ist ein modifiziertes Ausführungsbeispiel dargestellt. In diesem Ausführungsbeispiel ist ein druckbetätigtes Ventil 48 an einer Auslassöffnung des Druckausgleichskanals 46 vorgesehen. Das druckbetätigte Ventil 48 ist als eine elastische Lamelle ausgebildet. Die elastische Lamelle versperrt die Ausgangsöffnung des Druckausgleichskanals 46, wenn in der Zwischenkammer 44 und in der Kurbelkammer 16 das gleiche Druckniveau herrscht. Entsteht hingegen ein Unterdruck in der Zwischenkammer 44, so gibt die elastische Lamelle die Auslassöffnung des Druckausgleichskanals 46 frei. Luft kann dann aus der Kurbelkammer 16 durch den Druckausgleichskanal 46 in die Zwischenkammer 44 strömen. Einerseits kann damit die Entstehung eines ungewünschten Unterdrucks in der Zwischenkammer 44 verhindert werden. Andererseits kann keine mit Schmierfluid beladene Luft in die Zwischenkammer 44 gelangen, wenn kein Unterruck in der Zwischenkammer 44 herrscht.

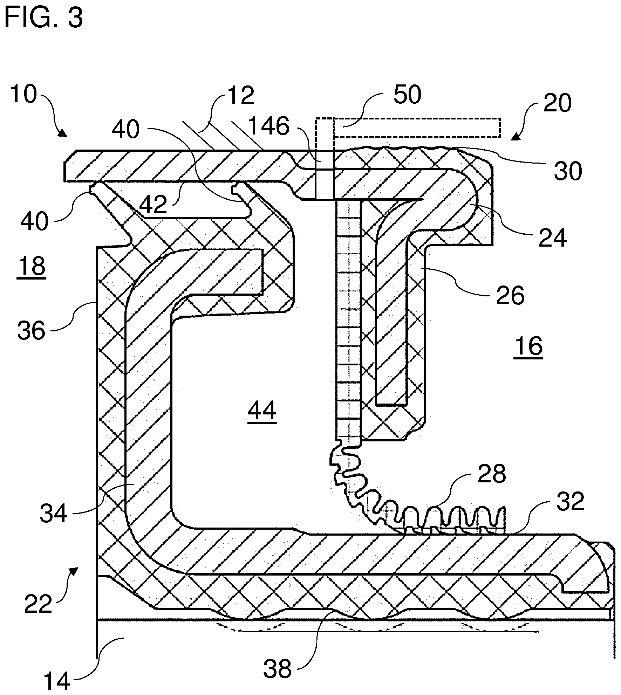

In Figur 3 ist ein weiteres modifiziertes Ausführungsbeispiel dargestellt. Hier erstreckt sich der Druckausgleichskanal 146 zwischen einer radialen Außenumfangsfläche des ersten Teils 20 und einer radialen Innenumfangsfläche des ersten Teils 20. Im Bereich der radialen Außenumfangsfläche mündet ein weiterer, im Kurbelgehäuse 12 vorgesehener Druckausgleichskanal 50 (nur schematisch dargestellt) in den Druckausgleichskanal 146. Der weitere Druckausgleichskanal 50 stellt eine Fluidverbindung zwischen der Kurbelkammer 16 und dem Druckausgleichskanal 146 her. Zusätzlich kann der Druckausgleichskanal 146 und/oder der Druckausgleichskanal 50 mit einem druckbetätigten Ventil (nicht dargestellt) versehen sein.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der mindestens einen Staubschutzlippe, der Schmierfluiddichtlippe, der Zwischenkammer und/oder des Druckausgleichskanals des unabhängigen Anspruchs 1 offenbart.

### Bezugszeichenliste

- 10: Mehrteilige Dichtung
- 12: Kurbelgehäuse
- 14: Kurbelwelle
- 16: Kurbelkammer
- 18: Umgebung
- 20: Erster Teil
- 22: Zweiter Teil
- 24: Stützelement
- 26: Elastomerelement
- 28: Schmierfluiddichtlippe
- 30: Statischer Abdichtbereich
- 32: Lauffläche
- 34: Stützelement
- 36: Elastomerelement
- 38: Statischer Abdichtbereich
- 40: Staubschutzlippe
- 42: Lauffläche
- 44: Zwischenkammer
- 46, 146: Druckausgleichskanal
- 48: Ventil
- 50: Weiterer Druckausgleichskanal

## Patentansprüche

1. Mehrteilige Dichtung (10), insbesondere Kassettendichtung, mit mindestens zwei relativ zueinander bewegbaren Teilen (20, 22), aufweisend:
mindestens eine zur Umgebung (18) hin abdichtende Staubschutzlippe (40);
eine zum abzudichtenden Raum (16) hin abdichtende Schmierfluiddichtlippe (28), wobei eine hohle Zwischenkammer (44) zwischen der mindestens einen Staubschutzlippe (40) und der Schmierfluiddichtlippe (28) gebildet ist; und
einen Druckausgleichskanal (46; 146), der in die Zwischenkammer (44) mündet, zum Zuführen eines Fluids in die Zwischenkammer (44). **dadurch gekennzeichnet dass** die Schmierfluiddichtlippe (28) dazu ausgebildet ist, aus dem abzudichtenden Raum in die Zwischenkammer (44) entwichenes Leckagefluid zum abzudichtenden Raum (16) hin zurückzufördern.

2. Mehrteilige Dichtung (10) nach Anspruch 1, wobei:
ein durch die Förderwirkung der Schmierfluiddichtlippe (28) erzeugter Unterdruck in der Zwischenkammer (44) mittels eines Fluids, das durch den Druckausgleichskanal (46; 146) in die Zwischenkammer (44) einströmt, kompensierbar ist oder kompensiert wird, sodass es, vorzugsweise, zu keiner Verformung der mindestens einen Staubschutzlippe (40) und/oder der Schmierfluiddichtlippe (28) unter der Einwirkung des Unterdrucks in der Zwischenkammer (44) kommt.

3. Mehrteilige Dichtung (10) nach Anspruch 1 oder Anspruch 2, wobei:
der Druckausgleichskanal (46; 146) den abzudichtenden Raum mit der Zwischenkammer (44) fluidisch verbindet; und/oder
der Druckausgleichskanal (46) sich zwischen der Zwischenkammer (44) und einer zum abzudichtenden Raum hin gewandten Seitenfläche der Dichtung (10) erstreckt; und/oder
der Druckausgleichskanal (146) sich zwischen der Zwischenkammer (44) und einer radialen Außenumfangsfläche der Dichtung (10) erstreckt.

4. Mehrteilige Dichtung (10) nach einem der vorherigen Ansprüche, wobei:
der Druckausgleichskanal (46; 146) gebohrt oder gestanzt ist; und/oder
der Druckausgleichskanal (46; 146) einen Durchmesser kleiner als 3 mm, insbesondere in einem Bereich zwischen 0,3 mm und 2 mm, aufweist.

5. Mehrteilige Dichtung (10) nach einem der vorherigen Ansprüche, wobei:
der Druckausgleichskanal (46; 146) sich durch ein Stützelement (24), insbesondere ein Blechteil, der Dichtung (10) erstreckt, und/oder
der Druckausgleichskanal (46; 146) sich durch ein Elastomerelement (26) der Dichtung (10) erstreckt.

6. Mehrteilige Dichtung (10) nach einem der vorherigen Ansprüche, wobei:
die Dichtung (10) einen gehäusefest anordenbaren oder angeordneten ersten Teil (20) und einen wellenfest anordenbaren oder angeordneten zweiten Teil (22) aufweist, wobei der erste Teil (20) und der zweite Teil (22) relativ zueinander bewegbar, insbesondere drehbar, sind.

7. Mehrteilige Dichtung (10) nach Anspruch 6, wobei:
die mindestens eine Staubschutzlippe (40) zwischen dem ersten Teil (20) und dem zweiten Teil (22) abdichtet; und/oder
die Schmierfluiddichtlippe (28) zwischen dem ersten Teil (20) und den zweiten Teil (22) abdichtet; und/oder
die Zwischenkammer (44) zwischen dem ersten Teil (20) und dem zweiten Teil (22) gebildet ist.

8. Mehrteilige Dichtung (10) nach Anspruch 6 oder Anspruch 7, wobei:
der erste Teil (20) und/oder der zweite Teil (22) mit dem Druckausgleichskanal (46; 146) versehen ist.

9. Mehrteilige Dichtung (10) nach einem der Ansprüche 6 bis 8, wobei:
der erste Teil (20) mit der Schmierfluiddichtlippe (28) und dem Druckausgleichskanal (46; 146) versehen ist; und/oder
der zweite Teil (22) mit der mindestens einen Staubschutzlippe (40) versehen ist.

10. Mehrteilige Dichtung (10) nach einem der Ansprüche 6 bis 9, wobei:
der erste Teil (20) einen statischen Abdichtbereich (30) zum Abdichten gegenüber einem Gehäuse (12) aufweist; und/oder
der zweite Teil (22) einen statischen Abdichtbereich (38) zum Abdichten gegenüber einer Welle (14) aufweist.

11. Mehrteilige Dichtung (10) nach einem der vorherigen Ansprüche, ferner aufweisend:
ein druckbetätigtes Ventil (48), das in oder an dem Druckausgleichskanal (46; 146) angeordnet ist und bei einem Unterdruck in der Zwischenkammer (44) öffnet.

12. Mehrteilige Dichtung (10) nach Anspruch 11, wobei:
das druckbetätigte Ventil (48) als eine elastische Lamelle ausgebildet ist.

13. Mehrteilige Dichtung (10) nach einem der vorherigen Ansprüche, wobei:
ein freies Ende der Schmierfluiddichtlippe (28) sich zu dem abzudichtenden Raum hin erstreckt; und/oder
die Schmierfluiddichtlippe (28) zumindest abschnittsweise profiliert, insbesondere wendelförmig, zum Fördern des entwichenen Leckagefluids ausgebildet ist; und/oder
die Zwischenkammer (44) direkt angrenzend an die mindestens eine Staubschutzlippe (40) und die Schmierfluiddichtlippe (28) angeordnet ist.

14. Mehrteilige Dichtung (10) nach einem der vorherigen Ansprüche, wobei:
die Dichtung (10) als Radialwellendichtring ausgebildet ist; und/oder
die Dichtung (10) für einen Presssitz zwischen einem Gehäuse (12) und einer Welle (14) ausgebildet ist, und/oder
die Dichtung (10) als eine Kurbelwellendichtung ausgebildet ist; und/oder
die Zwischenkammer (44) ein Ringraum ist.

15. Kraftfahrzeug, insbesondere Nutzfahrzeug, mit einer mehrteiligen Dichtung (10) nach einem der vorherigen Ansprüche.

## Claims

1. A multi-part seal (10), in particular cassette seal, comprising at least two parts (20, 22) which are movable relative to one another, having:
at least one dust protection lip (40), which provides sealing with respect to the surroundings (18) ;
a lubricating fluid sealing lip (28), which provides sealing with respect to the space (16) to be sealed off, wherein a hollow intermediate chamber (44) is formed between the at least one dust protection lip (40) and the lubricating fluid sealing lip (28); and a pressure equalization duct (46; 146), which opens into the intermediate chamber (44) and serves for the feed of a fluid into the intermediate chamber (44), **characterized in that** the lubricating fluid sealing lip (28) is designed for conveyance of leakage fluid, which has escaped from the space to be sealed off into the intermediate chamber (44), back towards the space (16) to be sealed off.

2. The multi-part seal (10) according to Claim 1, wherein:
a negative pressure in the intermediate chamber (44) that is generated by the conveyance effect of the lubricating fluid sealing lip (28) is able to be compensated, or is compensated, by means of a fluid which flows into the intermediate chamber (44) through the pressure equalization duct (46; 146), so that preferably no deformation of the at least one dust protection lip (40) and/or the lubricating fluid sealing lip (28) under the action of the negative pressure in the intermediate chamber (44) occurs.

3. The multi-part seal (10) according to Claim 1 or Claim 2, wherein:
the pressure equalization duct (46; 146) fluidically connects the space to be sealed off to the intermediate chamber (44); and/or
the pressure equalization duct (46) extends between the intermediate chamber (44) and a side surface, facing towards the space to be sealed off, of the seal (10); and/or
the pressure equalization duct (146) extends between the intermediate chamber (44) and a radial outer circumferential surface of the seal (10).

4. The multi-part seal (10) according to one of the preceding claims, wherein:
the pressure equalization duct (46; 146) is drilled or punched; and/or
the pressure equalization duct (46; 146) has a diameter of less than 3 mm, in particular in a range between 0.3 mm and 2 mm.

5. The multi-part seal (10) according to one of the preceding claims, wherein:
the pressure equalization duct (46; 146) extends through a support element (24), in particular a sheet-metal part, of the seal (10), and/or
the pressure equalization duct (46; 146) extends through an elastomer element (26) of the seal (10).

6. The multi-part seal (10) according to one of the preceding claims, wherein:
the seal (10) has a first part (20), which is able to be arranged, or is arranged, fixedly with respect to a housing, and a second part (22), which is able to be arranged, or is arranged, fixedly with respect to a shaft,
wherein the first part (20) and the second part (22) are movable, in particular rotatable, relative to one another.

7. The multi-part seal (10) according to Claim 6, wherein:
the at least one dust protection lip (40) provides sealing between the first part (20) and the second part (22); and/or
the lubricating fluid sealing lip (28) provides sealing between the first part (20) and the second part (22); and/or
the intermediate chamber (44) is formed between the first part (20) and the second part (22).

8. The multi-part seal (10) according to Claim 6 or Claim 7, wherein:
the first part (20) and/or the second part (22) are/is provided with the pressure equalization duct (46; 146).

9. The multi-part seal (10) according to one of Claims 6 to 8, wherein:
the first part (20) is provided with the lubricating fluid sealing lip (28) and the pressure equalization duct (46; 146); and/or
the second part (22) is provided with the at least one dust protection lip (40).

10. The multi-part seal (10) according to one of Claims 6 to 9, wherein:
the first part (20) has a static sealing region (30) for sealing with respect to a housing (12); and/or
the second part (20) has a static sealing region (38) for sealing with respect to a shaft (14).

11. The multi-part seal (10) according to one of the preceding claims, furthermore having:
a pressure-actuated valve (48), which is arranged in or on the pressure equalization duct (46; 146) and opens when there is a negative pressure in the intermediate chamber (44).

12. The multi-part seal (10) according to Claim 11, wherein:
the pressure-actuated valve (48) is in the form of an elastic lamella.

13. The multi-part seal (10) according to one of the preceding claims, wherein:
a free end of the lubricating fluid sealing lip (28) extends towards the space to be sealed off; and/or the lubricating fluid sealing lip (28) is at least sectionally profiled, in particular spiral-shaped, for conveyance of the escaped leakage fluid; and/or the intermediate chamber (44) is arranged directly adjoining the at least one dust protection lip (40) and the lubricating fluid sealing lip (28).

14. The multi-part seal (10) according to one of the preceding claims, wherein:
the seal (10) is in the form of a radial shaft sealing ring; and/or
the seal (10) is designed for a press fit between a housing (12) and a shaft (14), and/or
the seal (10) is in the form of a crankshaft seal; and/or
the intermediate chamber (44) is an annular chamber.

15. A motor vehicle, in particular utility vehicle, having a multi-part seal (10) according to one of the preceding claims.

## Revendications

1. Joint d'étanchéité en plusieurs parties (10), en particulier joint à cassette, comprenant au moins deux parties (20, 22) pouvant être déplacées l'une par rapport à l'autre, présentant :
au moins une lèvre de protection contre la poussière (40) réalisant l'étanchéité par rapport à l'environnement (18) ;
une lèvre d'étanchéité aux fluides de lubrification (28) réalisant l'étanchéité par rapport à l'espace à étanchéifier (16), une chambre intermédiaire creuse (44) étant formée entre l'au moins une lèvre de protection contre la poussière (40) et la lèvre d'étanchéité aux fluides de lubrification (28) ; et
un canal d'équilibrage de la pression (46 ; 146), qui débouche dans la chambre intermédiaire (44), pour acheminer un fluide dans la chambre intermédiaire (44), **caractérisé en ce que** la lèvre d'étanchéité aux fluides de lubrification (28) est réalisée de manière à ramener vers l'espace à étanchéifier (16) du fluide de fuite ayant fui dans la chambre intermédiaire (44) depuis l'espace à étanchéifier.

2. Joint d'étanchéité en plusieurs parties (10) selon la revendication 1, dans lequel :
une dépression générée dans la chambre intermédiaire (44) par l'action de refoulement de la lèvre d'étanchéité aux fluides de lubrification (28) est ou peut être compensée au moyen d'un fluide qui afflue à travers le canal d'équilibrage de la pression (46 ; 146) dans la chambre intermédiaire (44), de telle sorte qu'il ne se produise de préférence aucune déformation de l'au moins une lèvre de protection contre la poussière (40) et/ou de la lèvre d'étanchéité aux fluides de lubrification (28) sous l'effet de la dépression dans la chambre intermédiaire (44).

3. Joint d'étanchéité en plusieurs parties (10) selon la revendication 1 ou la revendication 2, dans lequel :
le canal d'équilibrage de la pression (46 ; 146) relie fluidiquement l'espace à étanchéifier à la chambre intermédiaire (44) ; et/ou
le canal d'équilibrage de la pression (46) s'étend entre la chambre intermédiaire (44) et une surface latérale du joint d'étanchéité (10) tournée vers l'espace à étanchéifier ; et/ou
le canal d'équilibrage de la pression (146) s'étend entre la chambre intermédiaire (44) et une surface périphérique extérieure radiale du joint d'étanchéité (10).

4. Joint d'étanchéité en plusieurs parties (10) selon l'une quelconque des revendications précédentes, dans lequel :
le canal d'équilibrage de la pression (46 ; 146) est percé ou estampé ; et/ou
le canal d'équilibrage de la pression (46 ; 146) présente un diamètre inférieur à 3 mm, en particulier compris dans une plage de 0,3 mm à 2 mm.

5. Joint d'étanchéité en plusieurs parties (10) selon l'une quelconque des revendications précédentes, dans lequel :
le canal d'équilibrage de la pression (46 ; 146) s'étend à travers un élément de support (24), en particulier une pièce en tôle, du joint d'étanchéité (10), et/ou
le canal d'équilibrage de la pression (46 ; 146) s'étend à travers un élément en élastomère (26) du joint d'étanchéité (10).

6. Joint d'étanchéité en plusieurs parties (10) selon l'une quelconque des revendications précédentes, le joint d'étanchéité (10) présentant une première partie (20) disposée ou pouvant être disposée fixement par rapport au boîtier et une deuxième partie (22) disposée ou pouvant être disposée fixement par rapport à un arbre, la première partie (20) et la deuxième partie (22) pouvant être déplacées, en particulier pouvant être tournées, l'une par rapport à l'autre.

7. Joint d'étanchéité en plusieurs parties (10) selon la revendication 6, dans lequel :
l'au moins une lèvre de protection contre la poussière (40) réalise l'étanchéité entre la première partie (20) et la deuxième partie (22) ; et/ou
la lèvre d'étanchéité aux fluides de lubrification (28) réalise l'étanchéité entre la première partie (20) et la deuxième partie (22) ; et/ou la chambre intermédiaire (44) est formée entre la première partie (20) et la deuxième partie (22).

8. Joint d'étanchéité en plusieurs parties (10) selon la revendication 6 ou la revendication 7, dans lequel :
la première partie (20) et/ou la deuxième partie (22) sont pourvues du canal d'équilibrage de la pression (46 ; 146).

9. Joint d'étanchéité en plusieurs parties (10) selon l'une quelconque des revendications 6 à 8, dans lequel :
la première partie (20) est pourvue de la lèvre d'étanchéité aux fluides de lubrification (28) et du canal d'équilibrage de la pression (46 ; 146) ; et/ou
la deuxième partie (22) est pourvue de l'au moins une lèvre de protection contre la poussière (40).

10. Joint d'étanchéité en plusieurs parties (10) selon l'une quelconque des revendications 6 à 9, dans lequel :
la première partie (20) présente une région d'étanchéité statique (30) pour réaliser l'étanchéité par rapport à un boîtier (12) ; et/ou la deuxième partie (22) présente une région d'étanchéité statique (38) pour réaliser l'étanchéité par rapport à un arbre (14).

11. Joint d'étanchéité en plusieurs parties (10) selon l'une quelconque des revendications précédentes, présentant en outre :
une soupape commandée par la pression (48) qui est disposée dans ou sur le canal d'équilibrage de la pression (46 ; 146) et qui s'ouvre en cas de dépression dans la chambre intermédiaire (44).

12. Joint d'étanchéité en plusieurs parties (10) selon la revendication 11, dans lequel :
la soupape commandée par la pression (48) est réalisée sous forme de lamelle élastique.

13. Joint d'étanchéité en plusieurs parties (10) selon l'une quelconque des revendications précédentes, dans lequel :
une extrémité libre de la lèvre d'étanchéité aux fluides de lubrification (28) s'étend vers l'espace à étanchéifier ; et/ou
la lèvre d'étanchéité aux fluides de lubrification (28) est profilée au moins en partie, en particulier est réalisée sous forme d'hélice pour refouler le fluide de fuite ayant fui ; et/ou
la chambre intermédiaire (44) est disposée de manière directement adjacente à l'au moins une lèvre de protection contre la poussière (40) et à la lèvre d'étanchéité aux fluides de lubrification (28) .

14. Joint d'étanchéité en plusieurs parties (10) selon l'une quelconque des revendications précédentes,
le joint d'étanchéité (10) étant réalisé sous forme de bague d'étanchéité radiale pour arbre ; et/ou
le joint d'étanchéité (10) étant réalisé en vue d'un ajustement serré entre un boîtier (12) et un arbre (14), et/ou
le joint d'étanchéité (10) étant réalisé sous forme de joint d'étanchéité pour vilebrequin ; et/ou
la chambre intermédiaire (44) étant un espace annulaire.

15. Véhicule automobile, en particulier véhicule utilitaire, comprenant un joint d'étanchéité en plusieurs parties (10) selon l'une quelconque des revendications précédentes.
